# EUROPEAN PATENT APPLICATION

(11) **EP 4 617 238 A1**
(43) Date of publication of application: **17.09.2025**
(21) Application number: 23910969.7
(22) Date of filing: 29.12.2023
(51) Int. Cl.: C01G 53/00, H01M 4/52

(54) **POSITIVE ELECTRODE MATERIAL PRECURSOR AND PREPARATION METHOD THEREFOR, AND POSITIVE ELECTRODE MATERIAL AND LITHIUM-ION BATTERY**

(30) Priority: 30.12.2022 CN 202211735640
(71) Applicant: CNGR Advanced Material Co., Ltd., Tongren, Guizhou 554300 (CN); Hunan CNGR New Energy Science & Technology Co., Ltd., Ningxiang Changsha, Hunan 410600 (CN)
(72) Inventor: YIN, Shuo, Tongren, Guizhou 554300 (CN); LI, Gui, Tongren, Guizhou 554300 (CN); WU, Xingke, Tongren, Guizhou 554300 (CN); CHANG, Haizhen, Tongren, Guizhou 554300 (CN)
(74) Representative: Loyer & Abello
(86) International application number: PCT/CN2023/143427
(87) International publication number: WO 2024/141056

(57) **Abstract**

A positive electrode material precursor and a preparation method therefor, and a positive electrode material and a lithium-ion battery. Primary particles of the positive electrode material precursor comprise a plurality of layers of sheet units, wherein the average number of sheet units is 5-30, and the thickness of a single sheet unit is 5-15 nm. By means of designing a structure, lithium ions are more easily deintercalated and diffused in a positive electrode material, and a conduction rate of the positive electrode material is greatly increased, such that the capacity and cycle performance of the positive electrode material are further enhanced.

## Description

### CROSS-REFERENCE TO RELATED APPLICATION

The present invention claims priority to Chinese patent application No. 202211735640.8 filed with the China National Intellectual Property Administration on December 30, 2022, and entitled "POSITIVE ELECTRODE MATERIAL PRECURSOR AND PREPARATION METHOD THEREFOR, POSITIVE ELECTRODE MATERIAL AND LITHIUM-ION BATTERY", the contents of which are incorporated herein by reference in entirety.

### TECHNICAL FIELD

The present invention pertains to the technical field of lithium-ion batteries, and particularly to a positive electrode material precursor (precursor for cathode material) and a preparation method therefor, a positive electrode material and a lithium-ion battery.

### BACKGROUND ART

With the development of new energy industry, technology of lithium batteries has become increasingly mature. Among various types of lithium batteries, due to remarkable advantages such as high energy density, excellent cycling performance, and superior lowtemperature tolerance, the ternary lithium batteries has been widely applied in the field of new energy vehicles.

A positive electrode material of the ternary lithium battery is an important factor affecting performance of the ternary lithium batteries. In a preparation process of the positive electrode material, a positive electrode material precursor is generally prepared in advance through a co-precipitation reaction, and then the positive electrode material precursor is further processed to obtain the positive electrode material. Currently, the positive electrode material mainly has the following problems: due to factors such as crystal structure and internal Li/Ni cation mixing, deintercalation of lithium ions is difficult, resulting in low initial discharge specific capacity and low Initial Coulombic efficiency of the positive electrode material; moreover, long migration paths of lithium ions and low conduction rate of lithium ions make deintercalation and intercalation of the lithium ions challenging, thus affecting cycling performance thereof.

### SUMMARY

In view of the above, the present invention provides a positive electrode material precursor and a preparation method therefor, a positive electrode material and a lithium-ion battery, so as to solve the problems of low specific capacity and cycling performance caused by long migration paths and low conduction efficiency of lithium ions in a positive electrode material in a lithium-ion battery.

Firstly, the present invention provides a positive electrode material precursor, wherein
primary particles of the positive electrode material precursor include multiple layers of platelet units; and
an average number of the platelet units ranges from 5 to 30, and each platelet unit has a thickness ranging from 5 to 15 nm. For example, an average number of the platelet units may be 5, 6, 7, 8, 9, 10, 11, 12, 13, 14, 15, 16, 17, 18, 19, 20, 21, 22, 23, 24, 25, 26, 27, 28, 29, 30 or any value between 5 and 30; and preferably, the average number of the platelet units ranges from 8 to 25. The thickness of each platelet unit may be 5 nm, 6 nm, 7 nm, 8 nm, 9 nm, 10 nm, 11 nm, 12 nm, 13 nm, 14 nm, 15 nm or any value between 5 and 15 nm. Preferably, the thickness of each platelet unit ranges from 5 to 12 nm; more preferably, the thickness of each platelet unit ranges from 7 to 12 nm; and more preferably, the thickness of each platelet unit ranges from 7 to 11.5 nm.

The present invention provides a positive electrode material precursor, the primary particles of which include multiple layers of platelet units, with the thickness of each platelet unit ranging from 5 to 15 nm, and the average number of the platelet units in the primary particles ranging from 5 to 30. Too small average number of the platelet units and too thin platelet units may make the primary particles of the positive electrode material precursor too thin on the whole, making the material prone to side reactions with an electrolyte, which degrades safety performance of a fabricated battery. Moreover, too thin platelet units also will excessively narrow transport channels of lithium ions and diminish a conduction rate of lithium ions. However, when the average number of the platelet units is too large and the platelet units are too thick, the primary particles of the obtained positive electrode material precursor will be too thick, thus reducing a reaction area of the material with the electrolyte; when each platelet unit is too thick, a single platelet unit will directly form one primary particle, in which case, the primary particles formed have low strength, and integrity of the primary particle, when being prepared into a positive electrode of a battery, cannot be maintained at a high temperature and a high voltage, thus being adverse to cycling performance of the battery.

In the present invention, the thickness and average number of the platelet units are controlled within the above ranges, so that the strength of the primary particles of the positive electrode material precursor is stable, and integrity of the primary particle, when being prepared into a positive electrode of a battery, can be maintained at a high temperature and a high voltage, thus ensuring the cycling performance of the battery; moreover, wider channels and shorter paths are provided for the transport of lithium ions, which is beneficial to the transport of lithium ions, avoids a diminished conduction rate of lithium ions, and can maximize the high-capacity and longcycle performance of the battery.

Preferably, the average number of the platelet units ranges from 5 to 30, and the thickness of each platelet unit ranges from 5 to 12 nm.

Preferably, the average number of the platelet units ranges from 8 to 25, and the thickness of each platelet unit ranges from 7 to 12 nm.

Preferably, the average number of the platelet units ranges from 8 to 25, and the thickness of each platelet unit ranges from 7 to 11.5 nm.

With the thickness and average number of the platelet units within these ranges, the battery fabricated with corresponding positive electrode material has higher capacity and better cycling performance.

Preferably, the primary particles of the positive electrode material precursor are formed by stacking a plurality of the platelet units.

Preferably, the primary particles formed by stacking are in an elongated shape; a particle width of the primary particles ranges from 30 to 150 nm; and preferably, a particle width of the primary particles ranges from 30 to 110 nm; a particle length of the primary particles ranges from 400 to 800 nm; a length-width ratio of the primary particles ranges from 2.0 to 13.0, and preferably, the length-width ratio of the primary particles ranges from 4.0 to 13.0. For example, the particle width of the primary particles may be 30 nm, 31 nm, 32 nm, 33 nm, 35 nm, 37 nm, 39 nm, 40 nm, 42 nm, 44 nm, 46 nm, 48 nm, 50 nm, 52 nm, 54 nm, 56 nm, 58 nm, 60 nm, 62 nm, 64 nm, 64.5 nm, 68 nm, 70 nm, 72 nm, 74 nm, 76 nm, 78 nm, 80 nm, 82 nm, 84 nm, 86 nm, 88 nm, 90 nm, 92 nm, 94 nm, 96 nm, 100 nm, 102 nm, 104 nm, 106 nm, 108 nm, 110 nm, 120 nm, 130 nm, 140 nm, 150 nm or any value between 30 and 150 nm; the length of the primary particles may be 400 nm, 430 nm, 450 nm, 470 nm, 475 nm, 480 nm, 490 nm, 500 nm, 530 nm, 550 nm, 600 nm, 650 nm, 700 nm, 720 nm, 730 nm, 750 nm, 770 nm, 790 nm, 800 nm or any value between 400 and 800 nm; the length-width ratio of the primary particles may be 2, 3, 4, 5, 6, 7, 8, 9, 10, 11, 12, 13 or any value between 2 and 13. The primary particles in the present invention have suitable length-width ratio, which is beneficial to improving the capacity and cycling performance of the positive material prepared with the positive electrode material precursor. It should be noted that the particle length of the primary particles in the present invention is obtained by measuring the longest distance between any two points on the primary particle in the SEM image, and the particle width of the primary particles is obtained by measuring the longest distance perpendicular to the length of the primary particle.

In optional solutions of the present invention, a chemical formula of the positive electrode material precursor is: NiₓCo_{y}M_{z}(OH)₂, where x+y+z=1, 0.7≤x<1, 0≤y≤0.3, 0<z≤0.3, M is at least one selected from Mg, Sr, Ba, B, Al, Si, Mn, Ti, Zr and W. Component nickel in the positive electrode material precursor accounts for 70% or more, which is conducive to improving the capacity of the positive electrode material.

In optional solutions of the present invention, in an XRD pattern of the positive electrode material precursor, a peak intensity ratio of I(101) to I(001) is 1.05-1.5. In the positive electrode material precursor provided in the present invention, the platelet units of the primary particles have suitable thickness and are in suitable quantity. On this basis, in the XRD pattern of the positive electrode material precursor, the peak intensity ratio of the positive electrode material precursor ranges from1.05 to 1.5. Growth of (101) facet determines the thickness of the platelet units. Due to the high peak intensity ratio of I(101) to I(001), the platelet units preferentially grow along the (101) facet rather than the (001) facet. The thickness of each platelet unit, affected by the growth of the positive electrode material precursor on the (101) facet, is kept within the range of 5-12 nm. The preferential growth of the platelet units along the (101) facet shortens the transport paths of lithium ions along the (001) facet, widens the transport channels of lithium ions in the positive electrode material precursor, and enhances the conduction rate of lithium ions, so that the electrochemical performance of the positive electrode material, such as capacity and cycling performance, are improved.

The preferential growth of the positive electrode material precursor along the (101) facet is beneficial to widening the transport channels of lithium ions, shortening dimension of the (001) facet and the conduction paths of lithium ions on the (001) facet, and improving the conduction rate of lithium ions.

In optional solutions of the present invention, in the XRD pattern of the positive electrode material precursor, a full width at half maximum(FWHM) of (001) facet ranges from 0.40° to 0.65°, and a full width at half maximum of (101) facet ranges from 0.45° to 0.60°. For example, in the XRD pattern of the positive electrode material precursor, the full width at half maximum of the (001) facet may be 0.40°, 0.41°, 0.42°, 0.43°, 0.44°, 0.45°, 0.46°, 0.47°, 0.48°, 0.49°, 0.50°, 0.51°, 0.52°, 0.53°, 0.54°, 0.55°, 0.56°, 0.57°, 0.58°, 0.59°, 0.60°, 0.61°, 0.62°, 0.63°, 0.64°, 0.65° or any value between 0.40° and 0.65°, for example, the full width at half maximum of the (101) facet may be 0.45°, 0.46°, 0.47°, 0.48°, 0.49°, 0.50°, 0.51°, 0.52°, 0.53°, 0.54°, 0.55°, 0.56°, 0.57°, 0.58°, 0.59°, 0.60° or any value between 0.45° and 0.60°. The positive electrode material precursor has a narrow full width at half maximum, and crystallinity of the material is high, thus improving the cycling performance of the positive electrode material.

In optional solutions of the present invention, a porosity of the positive electrode material precursor ranges from 2% to 14%. For example, the porosity of the positive electrode material precursor may be 2%, 3%, 4%, 5%, 6%, 7%, 8%, 9%, 10%, 11%, 12%, 13%, 14% or any value between 2% and 14%. Preferably, the porosity of the positive electrode material precursor ranges from 3% to 12%; more preferably, the porosity of the positive electrode material precursor ranges from 3% to 10%. Suitable porosity can enhance immersion of electrolyte without sacrificing cycling performance, and better play the role of the platelet units inside secondary particles, thus further improving the capacity.

In optional solutions of the present invention, D50 of the positive electrode material precursor ranges from 2 to 18 µm. For example, D50 of the positive electrode material precursor may be 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm or any value between 2 and 18 µm.

In the second aspect, the present invention further provides a preparation method for the above positive electrode material precursor, including:
providing a metal salt solution, a precipitating agent and a complexing agent; and
mixing the metal salt solution, the precipitating agent and the complexing agent and performing a co-precipitation reaction to render the positive electrode material precursor.

Further, mixing the metal salt solution, the precipitating agent and the complexing agent and performing a co-precipitation reaction to render the positive electrode material precursor specifically includes: mixing the precipitating agent, the complexing agent and pure water, so as to render a first base solution; adding the metal salt solution, the complexing agent and the precipitating agent into the first base solution, to perform a first co-precipitation reaction, so as to render the positive electrode material precursor.

Further, mixing the metal salt solution, the precipitating agent and the complexing agent and performing a co-precipitation reaction to render the positive electrode material precursor specifically includes: mixing the precipitating agent, the complexing agent and pure water, so as to render a first base solution, adding the metal salt solution, the complexing agent and the precipitating agent into the first base solution, to perform a first co-precipitation reaction, so as to render a first metal hydroxide; and mixing the first metal hydroxide, pure water, the precipitating agent and the complexing agent so as to render a second base solution, adding the metal salt solution, the complexing agent and the precipitating agent into the second base solution, to perform a second co-precipitation reaction, so as to render the positive electrode material precursor.

Further, in the providing the metal salt solution, the precipitating agent and the complexing agent, a concentration of the metal salt solution ranges from 1.0 to 2.0 mol/L; the precipitating agent includes a sodium hydroxide aqueous solution with a concentration ranging from 5 to 12 mol/L; and the complexing agent includes an aqueous ammonia solution with a concentration ranging from 1 to 10 mol/L; and a flow rate of adding the metal salt solution into the first base solution or the second base solution ranges from 4.0% to 7.5%/h of a total volume of a reaction vessel; a pH value of the first base solution ranges from 11 to 12, and an ammonia concentration in reaction system ranges from 2 to 5 g/L. Preferably, the metal salt solution is prepared from soluble salt solutions of nickel, cobalt, and manganese, and the soluble salt includes at least one of nitrate, chloride and sulfate.

Further, a pH value of the second base solution ranges from 10 to 11, and an ammonia concentration in reaction system ranges from 2 to 6 g/L; and preferably, the ammonia concentration in the reaction system ranges from 3 to 6 g/L.

In the third aspect, the present invention further provides a positive electrode material, prepared by the positive electrode material precursor provided in the above.

In the fourth aspect, the present invention further provides a lithium-ion battery, including the above positive electrode material.

The primary particles of the positive electrode material precursor provided in the present invention include multiple layers of platelet units, the thickness of each platelet unit ranges from 5 to 15 nm, and the average number of the platelet units in the primary particles is 5-30. In the present invention, the thickness and average number of the platelet units are controlled within the above ranges, so that the strength of the primary particles of the positive electrode material precursor is stable, and the integrity of the primary particles, when being fabricated into a positive electrode of a battery, can be maintained at a high temperature and a high voltage condition, thus ensuring the cycling performance of the battery. The suitable number and thickness range of the platelet units render a suitable width of the primary particles, so as to reduce side reactions of the positive electrode material with the electrolyte, and improve safety of the fabricated battery; moreover, suitable number and thickness range of the platelet units prevent the transport channels of lithium ions from becoming too narrow while ensuring material strength, thus facilitating the transport of lithium ions, and avoiding a diminished conduction rate of lithium ions, so that the positive electrode material prepared from the positive electrode material precursor has higher capacity and more excellent cycling performance.

In the preparation method for a positive electrode material precursor provided in the present invention, by adjusting the flow rates of solutions in the co-precipitation reaction, the pH values in the reaction system, the ammonia concentration and other reaction conditions, growth of the positive electrode material precursor in a reaction process is controlled, so as to enable the battery fabricated with corresponding positive electrode material of the precursor to have high capacity and cycling performance.

Other features and advantages of the present invention will be further described subsequently in specific embodiments.

### BRIEF DESCRIPTION OF DRAWINGS

In order to more clearly illustrate technical solutions in embodiments of the present invention or in the prior art, drawings which need to be used in the description of the embodiments or the prior art will be introduced briefly below. Apparently, the drawings in the following description merely show some embodiments of the present invention, and those ordinarily skilled in the art still could obtain other drawings in light of these drawings without using any inventive efforts.
FIG. 1a and FIG. 1a -1 are SEM (scanning electron microscopy) images of a positive electrode material precursor sample 1 exemplarily provided in the present invention;
FIG. 1a-2 is a CP (cross-sectional) image of the positive electrode material precursor sample 1 exemplarily provided in the present invention;
FIG. 1b and FIG. 1b -1 are partially enlarged SEM images of the positive electrode material precursor sample 1 in FIG. 1a;
FIG. 1c is an XRD (X-ray diffraction) pattern of the positive electrode material precursor sample 1 exemplarily provided in the present invention;
FIG. 2a is an SEM image of a positive electrode material precursor sample 2 exemplarily provided in the present invention;
FIG. 2b is a partially enlarged SEM image of the positive electrode material precursor sample 2 in FIG. 2a;
FIG. 2c is an XRD pattern of the positive electrode material precursor sample 2 exemplarily provided in the present invention;
FIG. 3a is an SEM image of positive electrode material precursor sample 3 exemplarily provided in the present invention;
FIG. 3b is a partially enlarged SEM image of the positive electrode material precursor sample 3 in FIG. 3a;
FIG. 4a is an SEM image of a positive electrode material precursor sample 4 exemplarily provided in the present invention;
FIG. 4b is a partially enlarged SEM image of the positive electrode material precursor sample 4 in FIG. 4a;
FIG. 4c is an XRD pattern of the positive electrode material precursor sample 4 exemplarily provided in the present invention;
FIG. 5a is an SEM image of a positive electrode material precursor sample 5 exemplarily provided in the present invention;
FIG. 5b is a partially enlarged SEM image of the positive electrode material precursor sample 5 in FIG. 5a;
FIG. 5c is an XRD pattern of the positive electrode material precursor sample 5 exemplarily provided in the present invention;
FIG. 6a is an SEM image of a positive electrode material precursor sample 9 exemplarily provided in the present invention;
FIG. 6b is a partially enlarged SEM image of the positive electrode material precursor sample 9 in FIG. 6a;
FIG. 6c is an XRD pattern of the positive electrode material precursor sample 9 exemplarily provided in the present invention; and
FIG. 7 is an SEM image of a positive electrode material precursor sample 11 exemplarily provided in the present invention.

### DETAILED DESCRIPTION OF EMBODIMENTS

In order to make the above and other characteristics and advantages of the present invention clearer, the present invention will be further described in conjunction with drawings below. It should be understood that embodiments presented herein are for purposes of explaining to those skilled in the art, and are merely exemplary, rather than restrictive.

A positive electrode material precursor is designed in the present invention as follows:
primary particles of the positive electrode material precursor include multiple layers of platelet units; and
an average number of the platelet units ranges from 5 to 30, and each platelet unit has a thickness ranging from 5 to 15 nm.

By controlling the thickness and number of the platelet units of the primary particles within appropriate ranges, lithium batteries prepared from corresponding positive electrode material of the positive electrode material precursor provided in the present invention is improved in capacity. The appropriate thickness and number of the platelet units can shorten conduction paths and widen transport channels of lithium ions , so that deintercalation and intercalation of lithium ions are easy, and a conduction rate of lithium ions is significantly improved. Moreover, the platelet units with appropriate number and thickness range can also ensure material strength, so that cycling performance of lithium batteries prepared from corresponding positive electrode material is improved. It can be understood that the positive electrode material precursor provided in the present invention includes a plurality of secondary particles, the secondary particles are composed of a plurality of primary particles, and the primary particles are formed by stacking a plurality of the platelet units.

Based on the above general inventive concept, the present invention further designs a preparation method for the positive electrode material precursor, mainly including the following steps:
providing a metal salt solution, a precipitating agent and a complexing agent;
mixing the precipitating agent, the complexing agent and pure water, so as to render a first base solution; adding the metal salt solution, the complexing agent and the precipitating agent into the first base solution, to perform a first co-precipitation reaction, so as to render a first metal hydroxide; and
mixing the first metal hydroxide, pure water, the precipitating agent and the complexing agent so as to render a second base solution, adding the metal salt solution, the complexing agent and the precipitating agent into the second base solution, to perform a second co-precipitation reaction, so as to render the positive electrode material precursor.

In optional solutions of embodiments of the present invention, after mixing the precipitating agent, the complexing agent and pure water to render the first base solution, adding the metal salt solution, the complexing agent and the precipitating agent into the first base solution, to perform the first co-precipitation reaction, the positive electrode material precursor can also be directly obtained.

In the above preparation method, during the co-precipitation reaction, flow rates of various solutions, ammonia concentration and pH value in reaction system can be controlled, so as to control growth of the positive electrode material precursor during the reaction, thereby regulating morphology of the positive electrode material precursor. The primary particles of the obtained positive electrode material precursor mainly include multiple layers of the platelet units.

The positive electrode material precursor and the preparation method therefor provided in the present invention will be further described below with specific examples.

### [Example 1]

Positive electrode material precursor sample 1, with a chemical formula of Ni_{0.94}Co_{0.05}Mn_{0.01}(OH)₂, was prepared by the following method:
preparing a nickel-cobalt-manganese solution with a molar ratio of Ni:Co:Mn=94:5:1 and a concentration of 2.0 mol/L from sulfate solutions of nickel, cobalt, and manganese, preparing a sodium hydroxide solution with a concentration of 5.5 mol/L as a precipitating agent, and preparing an aqueous ammonia solution with a concentration of 5 mol/L as a complexing agent;
mixing the sodium hydroxide solution, the aqueous ammonia solution and water and adding the mixture into a reaction kettle, a mass percentage concentration of the added sodium hydroxide solution being 32 wt%, and a mass percentage concentration of aqueous ammonia being 21 wt%, stirring uniformly under a constant-temperature condition, so as to render a first base solution with pH of 11-11.60; introducing an inert gas into the first base solution for protection, and adding the nickel-cobalt-manganese solution, the aqueous ammonia solution, and the sodium hydroxide solution into the reaction kettle containing the first base solution at constant rates using a circulating magnetic pump, based on a total capacity of the reaction kettle, a flow rate of the nickel-cobalt-manganese solution being 4%/h, a flow rate of the aqueous ammonia solution being 0.15%/h, and a flow rate of the sodium hydroxide solution being 1.48%/h, and under stirring at a constant temperature of 65 °C and a rotation speed of 150 r/min, performing a first co-precipitation reaction to generate a first nickel-cobalt-manganese hydroxide, where during the first co-precipitation reaction, the nickel-cobalt-manganese solution, the aqueous ammonia solution and the sodium hydroxide solution were continuously fed and discharged, with a discharge volume being equal to a total feed volume; and during reaction, the flow rates of the sodium hydroxide solution and the aqueous ammonia solution were fine-tuned, so as to maintain pH of a first co-precipitation reaction system within a range of 11.50-11.70 and ammonia concentration fluctuating within a range of 4-4.5 g/L, thereby maintaining stable particle size, and when the first co-precipitation reaction was stable, the first nickel-cobalt-manganese hydroxide was obtained;
adding the first nickel-cobalt-manganese hydroxide as crystal seed, pure water, the sodium hydroxide solution, and the aqueous ammonia solution into the reaction kettle, and stirring uniformly under a constant-temperature condition, so as to render a second base solution with pH of 10.50-10.80, a mass percentage concentration of the sodium hydroxide solution added being 32 wt%, and a mass percentage concentration of the aqueous ammonia solution being 21 wt%; introducing an inert gas into the second base solution for protection, and adding the nickel-cobalt-manganese mixed solution, the sodium hydroxide solution, and the aqueous ammonia solution into the reaction kettle containing the second base solution at constant rates using a circulating magnetic pump, based on a total capacity of the reaction kettle, a flow rate of the nickel-cobalt-manganese mixed solution being 6%/h, a flow rate of the aqueous ammonia solution being 0.2%/h, and a flow rate of the sodium hydroxide solution being 2.22%/h, and under stirring at a constant temperature of 65 °C and a rotation speed of 150 r/min, performing a second co-precipitation reaction to make the first nickel-cobalt-manganese hydroxide grow, where during the second co-precipitation reaction, the nickel-cobalt-manganese mixed solution, the sodium hydroxide solution, and the aqueous ammonia solution were continuously fed and discharged, with a discharge volume being equal to a total feed volume; and during the second co-precipitation reaction, the flow rates of the sodium hydroxide solution and the aqueous ammonia solution were fine-tuned, so as to maintain pH value of a second co-precipitation reaction system within a range of 10.40-10.60 and ammonia concentration fluctuating within a range of 4-4.5 g/L, moreover, the first nickel-cobalt-manganese hydroxide was continuously added to maintain stable particle size, and when the second co-precipitation reaction was stable, a second nickel-cobalt-manganese hydroxide was obtained; and
performing centrifugal washing on the second nickel-cobalt-manganese hydroxide, followed by drying and sieving, so as to render the positive electrode material precursor sample 1.

### [Example 2]

Positive electrode material precursor sample 2, with a chemical formula of Ni_{0.92}Co_{0.07}Mn_{0.01}(OH)₂, was prepared by the following method:
preparing a nickel-cobalt-manganese mixed solution with a molar ratio of Ni:Co:Mn=92:7:1 and a concentration of 2.0 mol/L from sulfate solutions of nickel, cobalt, and manganese, preparing a sodium hydroxide solution with a concentration of 5.5 mol/L as a precipitating agent, and preparing an aqueous ammonia solution with a concentration of 5 mol/L as a complexing agent;
mixing the sodium hydroxide solution, the aqueous ammonia solution and water and adding the mixture into a reaction kettle, a mass percentage concentration of the added sodium hydroxide solution being 32 wt%, and a mass percentage concentration of aqueous ammonia being 21 wt%, stirring uniformly under a constant-temperature condition, so as to render a first base solution with pH of 11-11.60; introducing an inert gas into the first base solution for protection, and adding the nickel-cobalt-manganese mixed solution, the aqueous ammonia solution, and the sodium hydroxide solution into the reaction kettle containing the first base solution at constant rates using a circulating magnetic pump, based on a total capacity of the reaction kettle, a flow rate of the nickel-cobalt-manganese mixed solution being 4%/h, a flow rate of the aqueous ammonia solution being 0.20%/h, and a flow rate of the sodium hydroxide solution being 1.48%/h, and under stirring at a constant temperature of 65 °C and a rotation speed of 150 r/min, performing a first co-precipitation reaction to generate a first nickel-cobalt-manganese hydroxide, where during the first co-precipitation reaction, the nickel-cobalt-manganese mixed solution, the aqueous ammonia solution, and the sodium hydroxide solution were continuously fed and discharged, and during the reaction, the flow rates of the sodium hydroxide solution and the aqueous ammonia solution were fine-tuned, so as to maintain pH of a first co-precipitation reaction system within a range of 11.50-11.70 and ammonia concentration fluctuating within a range of 4-4.5 g/L, thereby maintaining stable particle size, and when the first co-precipitation reaction was stable, the first nickel-cobalt-manganese hydroxide was obtained;
adding the first nickel-cobalt-manganese hydroxide as crystal seed, pure water, the sodium hydroxide solution, and the aqueous ammonia solution into the reaction kettle, and stirring uniformly under a constant-temperature condition, so as to render a second base solution with pH of 10.50-10.80, a mass percentage concentration of the sodium hydroxide solution added being 32 wt%, and a mass percentage concentration of the aqueous ammonia solution being 21 wt%; introducing an inert gas into the second base solution for protection, and adding the nickel-cobalt-manganese mixed solution, the sodium hydroxide solution, and the aqueous ammonia solution into the reaction kettle containing the second base solution at constant rates using a circulating magnetic pump, based on a total capacity of the reaction kettle, a flow rate of the nickel-cobalt-manganese mixed solution being 7%/h, a flow rate of the aqueous ammonia solution being 0.20%/h, and a flow rate of the sodium hydroxide solution being 2.59%/h, and under stirring at a constant temperature of 65 °C and a rotation speed of 150 r/min, performing a second co-precipitation reaction to make the first nickel-cobalt-manganese hydroxide grow, where during the second co-precipitation reaction, the nickel-cobalt-manganese mixed solution, the sodium hydroxide solution, and the aqueous ammonia solution were continuously fed and discharged; and during the second co-precipitation reaction, the flow rates of the sodium hydroxide solution and the aqueous ammonia solution were fine-tuned so as to maintain pH value of a second co-precipitation reaction system within a range of 10.40-10.60 and ammonia concentration fluctuating within a range of 4-4.5 g/L, moreover, the first nickel-cobalt-manganese hydroxide was continuously added to maintain stable particle size, and when the second co-precipitation reaction was stable, a second nickel-cobalt-manganese hydroxide was obtained; and
performing centrifugal washing on the second nickel-cobalt-manganese hydroxide, followed by drying and sieving, so as to render the positive electrode material precursor sample 2.

### [Example 3]

Positive electrode material precursor sample 3, with a chemical formula of Ni_{0.94}Co_{0.05}Mn_{0.01}(OH)₂, was prepared by the following method:
preparing a nickel-cobalt-manganese mixed solution with a molar ratio of Ni:Co:Mn=94:5:1 and a concentration of 2.0 mol/L from sulfate solutions of nickel, cobalt, and manganese, preparing a sodium hydroxide solution with a concentration of 5.5 mol/L as a precipitating agent, and preparing an aqueous ammonia solution with a concentration of 5 mol/L as a complexing agent;
mixing the sodium hydroxide solution, the aqueous ammonia solution and water and adding the mixture into a reaction kettle, a mass percentage concentration of the added sodium hydroxide solution being 32 wt%, and a mass percentage concentration of aqueous ammonia being 21 wt%, stirring uniformly under a constant-temperature condition, so as to render a first base solution with pH of 11-11.60; introducing an inert gas into the first base solution for protection, and adding the nickel-cobalt-manganese mixed solution, the aqueous ammonia solution, and the sodium hydroxide solution into the reaction kettle containing the first base solution at constant rates using a circulating magnetic pump, based on a total capacity of the reaction kettle, a flow rate of the nickel-cobalt-manganese mixed solution being 4%/h, a flow rate of the aqueous ammonia solution being 0.20%/h, and a flow rate of the sodium hydroxide solution being 1.48%/h, and under stirring at a constant temperature of 65 °C and a rotation speed of 150 r/min, discharging a mother liquor by concentration equipment, a discharge volume being consistent with a total feeding volume; and performing a first co-precipitation reaction to render the first nickel-cobalt-manganese hydroxide; and
performing centrifugal washing on the first nickel-cobalt-manganese hydroxide, followed by drying and sieving, so as to render the positive electrode material precursor sample 3.

### [Comparative Example 1]

Positive electrode material precursor sample 4, with a chemical formula of Ni_{0.94}Co_{0.05}Mn_{0.01}(OH)₂, was prepared by the following method:
preparing a nickel-cobalt-manganese mixed solution with a molar ratio of Ni:Co:Mn=94:5:1 and a concentration of 2.0 mol/L from sulfate solutions of nickel, cobalt, and manganese, preparing a sodium hydroxide solution with a concentration of 5.5 mol/L as a precipitating agent, and preparing an aqueous ammonia solution with a concentration of 5 mol/L as a complexing agent;
mixing the sodium hydroxide solution, the aqueous ammonia solution and water and adding the mixture into a reaction kettle, a mass percentage concentration of the added sodium hydroxide solution being 32 wt%, and a mass percentage concentration of aqueous ammonia being 21 wt%, stirring uniformly under a constant-temperature condition, so as to render a first base solution with pH of 11.6-11.70; introducing an inert gas into the first base solution for protection, and adding the nickel-cobalt-manganese mixed solution, the aqueous ammonia solution, and the sodium hydroxide solution into the reaction kettle containing the first base solution at constant rates using a circulating magnetic pump, based on a total capacity of the reaction kettle, a flow rate of the nickel-cobalt-manganese mixed solution being 4%/h, a flow rate of the aqueous ammonia solution being 0.15%/h, and a flow rate of the sodium hydroxide solution being 1.48%/h, and under stirring at a constant temperature of 65 °C, performing a first co-precipitation reaction to generate a first nickel-cobalt-manganese hydroxide, where during the first co-precipitation reaction, the nickel-cobalt-manganese mixed solution, the aqueous ammonia solution, and the sodium hydroxide solution were continuously fed and discharged, and during the reaction, the flow rates of the sodium hydroxide solution and the aqueous ammonia solution were fine-tuned, so as to maintain pH of a first co-precipitation reaction system within a range of 11.70-11.80 and ammonia concentration fluctuating within a range of 3-3.5 g/L, thereby maintaining stable particle size, and after the first co-precipitation reaction, the first nickel-cobalt-manganese hydroxide was obtained;
adding the first nickel-cobalt-manganese hydroxide as crystal seed, water, the sodium hydroxide solution, and the aqueous ammonia solution into the reaction kettle, and stirring uniformly under a constant-temperature condition, so as to render a second base solution with pH of 10.50-10.80, a mass percentage concentration of the sodium hydroxide solution added being 32 wt%, and a mass percentage concentration of the aqueous ammonia solution being 21 wt%; introducing an inert gas into the second base solution for protection, and adding the nickel-cobalt-manganese mixed solution, the sodium hydroxide solution, and the aqueous ammonia solution into the reaction kettle containing the second base solution at constant rates using a circulating magnetic pump, based on a total capacity of the reaction kettle, a flow rate of the nickel-cobalt-manganese mixed solution being 6%/h, a flow rate of the aqueous ammonia solution being 0.15%/h, and a flow rate of the sodium hydroxide solution being 2.22%/h, and under stirring at a constant temperature of 65 °C and a rotation speed of 150 r/min, performing a second co-precipitation reaction to make the first nickel-cobalt-manganese hydroxide grow, where during the second co-precipitation reaction, the nickel-cobalt-manganese mixed solution, the sodium hydroxide solution, and the aqueous ammonia solution were continuously fed and discharged; and during the second co-precipitation reaction, the flow rates of the sodium hydroxide solution and the aqueous ammonia solution were fine-tuned so as to maintain pH value of a second co-precipitation reaction system within a range of 10.20-10.40 and ammonia concentration fluctuating within a range of 2-2.5 g/L, moreover, the first nickel-cobalt-manganese hydroxide was continuously added to maintain stable particle size, and when the second co-precipitation reaction was stable, a second nickel-cobalt-manganese hydroxide was obtained; and
performing centrifugal washing on the second nickel-cobalt-manganese hydroxide, followed by drying and sieving, so as to render the positive electrode material precursor sample 4.

### [Comparative Example 2]

Positive electrode material precursor sample 5, with a chemical formula of Ni_{0.92}Co_{0.07}Mn_{0.01}(OH)₂, was prepared by the following method:
preparing a nickel-cobalt-manganese mixed solution with a molar ratio of Ni:Co:Mn=92:7:1 and a concentration of 2.0 mol/L from sulfate solutions of nickel, cobalt, and manganese, preparing a sodium hydroxide solution with a concentration of 5.5 mol/L as a precipitating agent, and preparing an aqueous ammonia solution with a concentration of 5 mol/L as a complexing agent;
mixing the sodium hydroxide solution, the aqueous ammonia solution and water and adding the mixture into a reaction kettle, a mass percentage concentration of the added sodium hydroxide solution being 32 wt%, and a mass percentage concentration of aqueous ammonia being 21 wt%, stirring uniformly under a constant-temperature condition, so as to render a first base solution with pH of 11.6-11.70; introducing an inert gas into the first base solution for protection, and adding the nickel-cobalt-manganese mixed solution, the aqueous ammonia solution, and the sodium hydroxide solution into the reaction kettle containing the first base solution at constant rates using a circulating magnetic pump, based on a total capacity of the reaction kettle, a flow rate of the nickel-cobalt-manganese mixed solution being 4%/h, a flow rate of the aqueous ammonia solution being 0.15%/h, and a flow rate of the sodium hydroxide solution being 1.48%/h, and under stirring at a constant temperature of 65 °C, performing a first co-precipitation reaction to generate a first nickel-cobalt-manganese hydroxide, where during the first co-precipitation reaction, the nickel-cobalt-manganese mixed solution, the aqueous ammonia solution, and the sodium hydroxide solution were continuously fed and discharged, and during the reaction, the flow rates of the sodium hydroxide solution and the aqueous ammonia solution were fine-tuned, so as to maintain pH of a first co-precipitation reaction system within a range of 10.70-10.80 and ammonia concentration fluctuating within a range of 3-3.5 g/L, thereby maintaining stable particle size, and after the first co-precipitation reaction, the first nickel-cobalt-manganese hydroxide was obtained;
adding the first nickel-cobalt-manganese hydroxide as crystal seed, water, the sodium hydroxide solution, and the aqueous ammonia solution into the reaction kettle, and stirring uniformly under a constant-temperature condition, so as to render a second base solution with pH of 10.50-10.80, a mass percentage concentration of the sodium hydroxide solution added being 32 wt%, and a mass percentage concentration of the aqueous ammonia solution being 21 wt%; introducing an inert gas into the second base solution for protection, and adding the nickel-cobalt-manganese mixed solution, the sodium hydroxide solution, and the aqueous ammonia solution into the reaction kettle containing the second base solution at constant rates using a circulating magnetic pump, based on a total capacity of the reaction kettle, a flow rate of the nickel-cobalt-manganese mixed solution being 8%/h, a flow rate of the aqueous ammonia solution being 0.28%/h, and a flow rate of the sodium hydroxide solution being 2.96%/h, and under stirring at a constant temperature of 65 °C and a rotation speed of 150 r/min, performing a second co-precipitation reaction to make the first nickel-cobalt-manganese hydroxide grow, where during the second co-precipitation reaction, the nickel-cobalt-manganese mixed solution, the sodium hydroxide solution, and the aqueous ammonia solution were continuously fed and discharged; and during the second co-precipitation reaction, the flow rates of the sodium hydroxide solution and the aqueous ammonia solution were fine-tuned so as to maintain pH value of a second co-precipitation reaction system within a range of 10.20-10.40 and ammonia concentration fluctuating within a range of 2-2.5 g/L, moreover, the first nickel-cobalt-manganese hydroxide was continuously added to maintain stable particle size, and when the second co-precipitation reaction was stable, a second nickel-cobalt-manganese hydroxide was obtained; and
performing centrifugal washing on the second nickel-cobalt-manganese hydroxide, followed by drying and sieving, so as to render the positive electrode material precursor sample 5.

### [Example 4]

Reaction conditions for a positive electrode material precursor sample 6 prepared in Example 4 were consistent with those in Example 1, except that the flow rate of the nickel-cobalt-manganese mixed solution added into the second base solution was 9%/h and the flow rate of the aqueous ammonia solution was 0.15%/h.

### [Example 5]

Reaction conditions for a positive electrode material precursor sample 7 prepared in Example 5 were consistent with those in Example 2, except that the flow rate of the nickel-cobalt-manganese mixed solution added into the second base solution was 5%/h and the flow rate of the aqueous ammonia solution was 0.25%/h.

### [Example 6]

Reaction conditions for a positive electrode material precursor sample 8 prepared in Example 6 were consistent with those in Example 1, except that the chemical formula was Ni_{0.88}Co_{0.04}Mn_{0.08}(OH)₂, and the nickel-cobalt-manganese mixed solution with a molar ratio of Ni:Co:Mn=88:4:8 and a concentration of 2.0 mol/L was prepared from sulfate solutions of nickel, cobalt, and manganese.

### [Example 7]

A positive electrode material precursor sample 9 prepared in Example 7 had a chemical formula of Ni_{0.92}Co_{0.05}Mn_{0.03}(OH)₂, the nickel-cobalt-manganese mixed solution with a molar ratio of Ni:Co:Mn=92:5:3 and a concentration of 2.0 mol/L was prepared from sulfate solutions of nickel, cobalt, and manganese, and reaction conditions were consistent with those in Example 3, except that pH of the first base solution was 11.3-11.90, the flow rate of the nickel-cobalt-manganese mixed solution added into the first base solution was 5%/h, the flow rate of the sodium hydroxide solution was 1.9%/h, and the reaction temperature was constant at 60 °C.

### [Example 8]

Reaction conditions for a positive electrode material precursor sample 10 prepared in Example 8 were consistent with those in Example 7, except that pH of the first base solution was 11.4-11.90, the flow rate of the nickel-cobalt-manganese mixed solution added into the first base solution was 4.5%/h.

### [Example 9]

Reaction conditions for a positive electrode material precursor sample 11 prepared in Example 9 were consistent with those in Example 7, except that pH of the first base solution was 11.0-11.50, the flow rate of the nickel-cobalt-manganese mixed solution added into the first base solution was 5%/h.

### [Example 10]

A positive electrode material precursor sample 12 prepared in Example 10 had a chemical formula of Ni_{0.88}Co_{0.04}Mn_{0.08}(OH)₂, the nickel-cobalt-manganese mixed solution with a molar ratio of Ni:Co:Mn=88:4:8 and a concentration of 2.0 mol/L was prepared from sulfate solutions of nickel, cobalt, and manganese. Other reaction conditions were consistent with those in Comparative Example 1.

### [Comparative Example 3]

A positive electrode material precursor sample 13 prepared in Comparative Example 3 had a chemical formula of Ni_{0.94}Co_{0.05}Mn_{0.01}(OH)₂, the nickel-cobalt-manganese mixed solution with a molar ratio of Ni:Co:Mn=94:5:1 and a concentration of 2.0 mol/L was prepared from sulfate solutions of nickel, cobalt, and manganese, and reaction conditions were consistent with those in Example 3, except that pH of the first base solution was 11.0-11.40, the flow rate of the nickel-cobalt-manganese mixed solution added into the first base solution was 3.9%/h, and the flow rate of the sodium hydroxide solution was 1.46%/h.

The positive electrode material precursors prepared in Examples 1-10 and Comparative Examples 1-3 were measured and characterized, with statistical data listed in Table 1 and Table 2.

**Table 1: Statistical Data for Examples 1-3 and Comparative Examples 1-3**

| | Example 1 | Example 2 | Example 3 | Comparative Example 1 | Comparative Example 2 | Comparative Example 3 |
|---|---|---|---|---|---|---|
| Chemical formula | Ni_{0.94}Co_{0.05}M n_{0.01}(OH)₂ | Ni_{0.92}Co_{0.07}M n_{0.01}(OH)₂ | Ni_{0.94}Co_{0.05}M n_{0.01}(OH)₂ | Ni_{0.94}Co_{0.05}M n_{0.01}(OH)₂ | Ni_{0.92}Co_{0.07}M n_{0.01}(OH)₂ | Ni_{0.94}Co_{0.05}M n_{0.01}(OH)₂ |
| Platelet unit thickness | 7.4 nm | 7.17 nm | 11.56 nm | 1.98 nm | 3.27 nm | 15.6 nm |
| | | | | | | |
| Average number of platelet units | 24 | 8 | 6.64 | 51 | 23 | 3 |
| | | | | | | |
| Primary particle width | 94 nm | 64.5 nm | 76.8 nm | 117 nm | 75.2 nm | 67.8 nm |
| | | | | | | |
| Primary particle length | 754 nm | 478 nm | 437 nm | 870 nm | 671.5 nm | 485 nm |
| | | | | | | |
| Length-width ratio | 8 | 7.41 | 5.69 | 7.44 | 8.93 | 7.16 |
| | | | | | | |
| Porosity | 8.6% | 6.7% | 7.1% | 7.3% | 3.6% | 4.1% |
| | | | | | | |
| D50 | 10.375 µm | 10.042 µm | 10.022 µm | 10.137 µm | 10.258 µm | 10.148 µm |
| | | | | | | |
| 101/001 | 1.2 | 1.21 | 1.3 | 1.25 | 1.1 | / |
| | | | | | | |
| FWHM(001) | 0.543° | 0.543° | 0.571° | 0.683° | 0.711° | / |
| | | | | | | |
| FWHM(101) | 0.479° | 0.445° | 0.452° | 0.592° | 0.651° | / |

| | | | | | | |
|---|---|---|---|---|---|---|
| Note: in Table 1, "span" represents particle size distribution, span=(D90-D10)/D50; "101/001" is peak intensity ratio of I(101) to I(001) in an XRD pattern, "platelet unit number" is average number of the platelet units in the primary particles, and "platelet unit thickness" is thickness of each platelet unit. In order to evaluate characteristics of porosity, the present invention analyzes the CP image using image analysis software (avizo), to obtain a pore area and a total area of a test region, where porosity=pore area/total area×100%, from which the porosity of the test region is calculated. The porosity of an entire secondary particle can be obtained by selecting a cross section of the entire secondary particle as a test region. Several (e.g., 3-5) secondary particles are randomly selected as test objects, to measure the porosity of each secondary particle by the above method, and then an arithmetic average value of the porosity is calculated as porosity of precursor material. | | | | | | |

**Table 2: Statistical Data for Examples 4-10**

| | Example 4 | Example 5 | Example 6 | Example 7 | Example 8 | Example 9 | Example 10 |
|---|---|---|---|---|---|---|---|
| Chemical formula | Ni_{0.94}Co_{0.05} Mn_{0.01}(OH)₂ | Ni_{0.92}Co_{0.07}M n_{0.01}(OH)₂ | Ni_{0.88}Co_{0.04}M n_{0.08}(OH)₂ | Ni_{0.92}Co_{0.05} Mn_{0.03}(OH)₂ | Ni_{0.92}Co_{0.05}M n_{0.03}(OH)₂ | Ni_{0.92}Co_{0.05}M n_{0.03}(OH)₂ | Ni_{0.88}Co_{0.04}M n_{0.08}(OH)₂ |
| Platelet unit thickness | 7.33 nm | 6.95 nm | 7.63 nm | 7.67 nm | 12.88 nm | 11.82 nm | 3.25 nm |
| | | | | | | | |
| Average number of platelet units | 20 | 13 | 19 | 9 | 11 | 10 | 48 |
| | | | | | | | |
| Primary particle width | 78 nm | 53 nm | 89 nm | 99 nm | 139 nm | 141 nm | 105 nm |
| | | | | | | | |
| Primary particle length | 344 nm | 554 nm | 734 nm | 426 nm | 360 nm | 414 nm | 821 nm |
| | | | | | | | |
| Length-width ratio | 6.5 | 7.1 | 8.24 | 4.3 | 2.59 | 2.93 | 7.82 |
| | | | | | | | |
| Porosity | 13.80% | 2.20% | 8.20% | 3.20% | 2.40% | 4.30% | 7.60% |
| | | | | | | | |
| D50 | 10.130 µm | 10.574 µm | 10.353 µm | 3.525 µm | 3.013 µm | 2.448 µm | 9.986 µm |

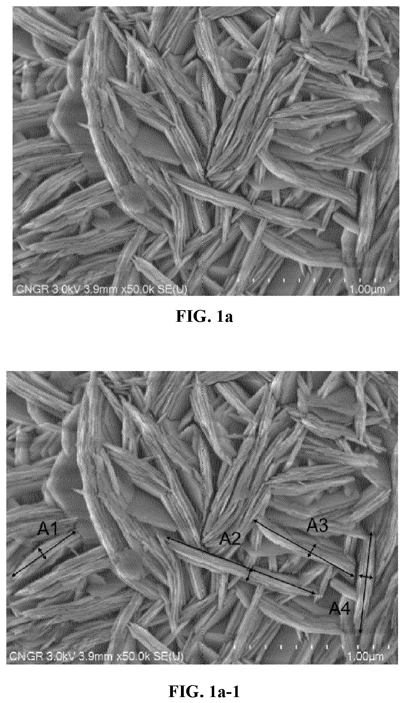

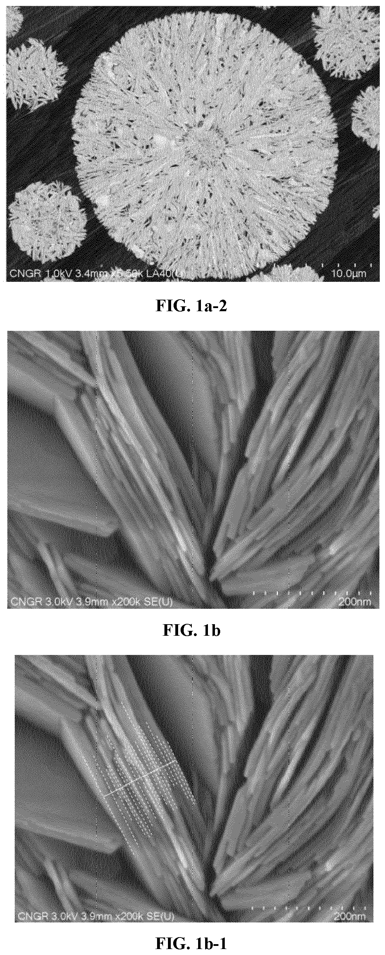

Chemical formula of the positive electrode material precursor sample 1 prepared in Example 1 was Ni_{0.94}Co_{0.05}Mn_{0.01}(OH)₂, particle size distribution span=1.361, SEM and XRD are respectively as shown in FIGS. 1a-1c. As can be seen from CP images, the secondary particle of the positive electrode material precursor sample 1 was spherical and composed of a plurality of primary particles radially arranged. The primary particles had a width of 94 nm and a length of 754 nm, thus a length-width ratio being 8.0, where the width and length of the primary particles refer to average width and average length of the primary particles, specifically measured by a method as shown in FIG. 1a-1: randomly selecting four primary particles in the SEM image, and measuring lengths and widths of the primary particles A1, A2, A3 and A4, that is, L_{A1}=529 nm, L_{A2}=994 nm, L_{A3}=763 nm, and L_{A4}=730 nm, thus calculating the average length of the primary particles as (L_{A1}+L_{A2}+L_{A3}+L_{A4})/4=754 nm; W_{A1}=82 nm, W_{A2}=100 nm, W_{A3}=103 nm, and W_{A4}=91 nm, thus calculating the average width of the primary particles as (W_{A1}+W_{A2}+W_{A3}+W_{A4})/4=94 nm; I(101)/I(001)=1.20 in the XRD test; the thickness of each platelet unit was 7.4 nm, the average number of the platelet units in the primary particles was 24, and the thickness of each platelet unit was specifically measured as follows: randomly taking 10 different primary particles in at least three SEM images, measuring thicknesses T1, T2,...,T9, T10 and the number N1, N2,...,N9, N10 of the primary particles respectively, the thickness of the platelet units being (T1+T2 +...+T9+T10)/(N1+N2+...+N9+N10), and the average number of the platelet units being (N1+N2+...+N9+N10)/10 (the thickness and the platelet units of one primary particle are as shown in FIG. 1b-1), thus finally determining the thickness of the platelet units to be 7.4 nm, and the average number 24.

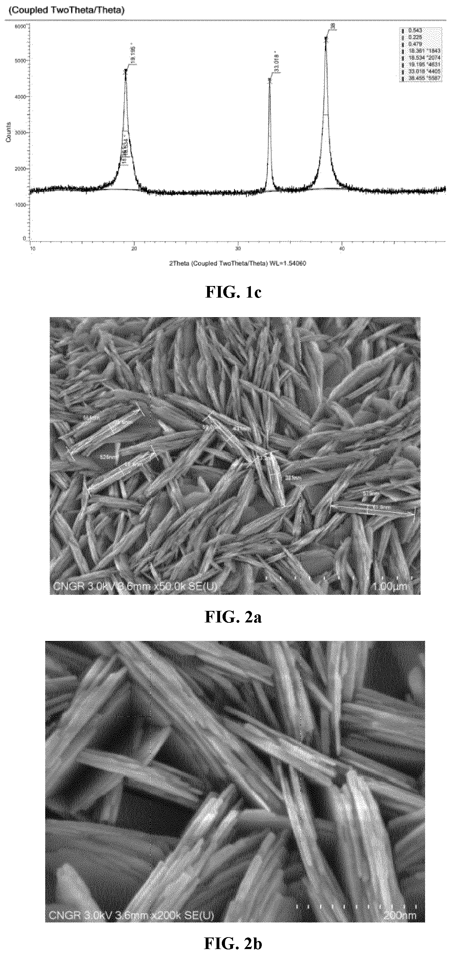

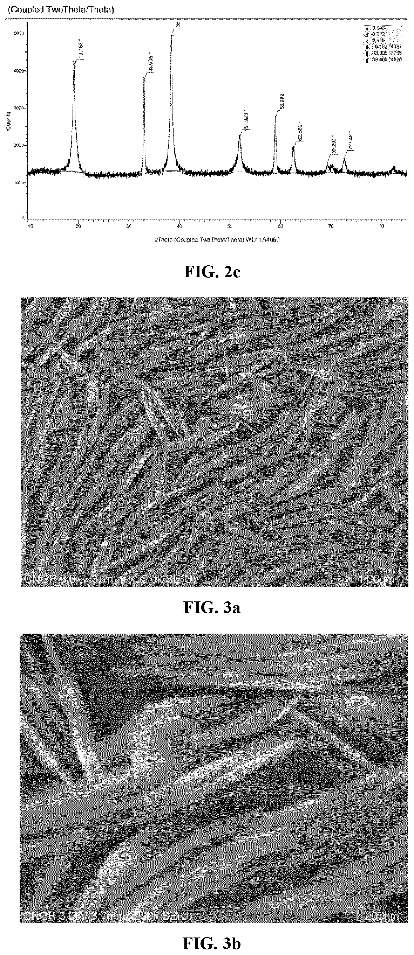

Chemical formula of the positive electrode material precursor sample 2 prepared in Example 2 was Ni_{0.92}Co_{0.07}Mn_{0.01}(OH)₂, particle size distribution span=1.353, and SEM and XRD are respectively as shown in FIGS. 2a-2c. The primary particles of the positive electrode material precursor sample 2 had a width of 64.5 nm and a length of 478 nm, thus a length-width ratio being 7.41; in the XRD test, I(101)/I(001)=1.21, the thickness of each platelet unit was 7.17 nm, and the average number of the platelet units in the primary particles was 8.

Chemical formula of the positive electrode material precursor sample 3 prepared in Example 3 was Ni_{0.94}Co_{0.05}Mn_{0.01}(OH)₂, particle size distribution span=0.621, and SEM and XRD are respectively as shown in FIGS. 3a-3c. The primary particles of the positive electrode material precursor sample 3 had a width of 76.8 nm, and a length of 437 nm, thus a length-width ratio being 5.69; in the XRD test, I(101)/I(001)=1.30, the thickness of each platelet unit was 11.56 nm, and the average number of the platelet units in the primary particles was 6.64.

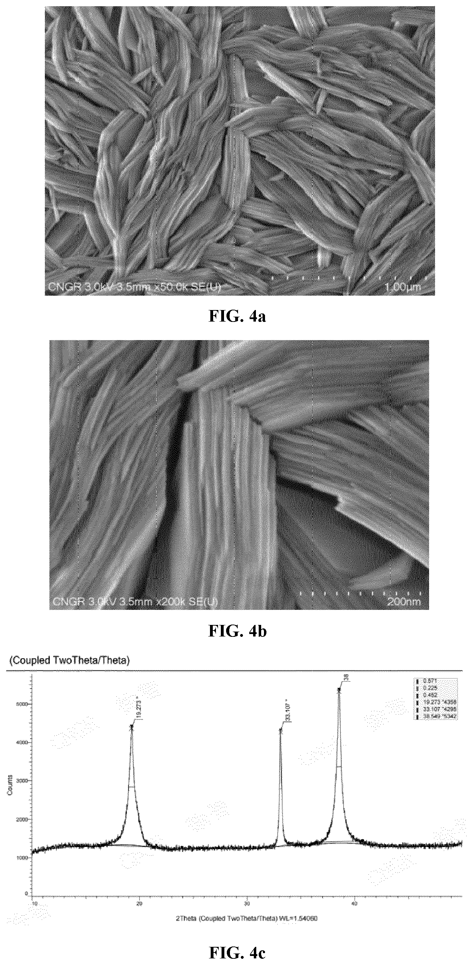

Chemical formula of the positive electrode material precursor sample 4 prepared in Comparative Example 1 was Ni_{0.94}Co_{0.05}Mn_{0.01}(OH)₂, particle size distribution span=1.311, and SEM and XRD are as shown in FIGS. 4a-4c. The primary particles had a width of 117 nm and a length of 870 nm, thus a length-width ratio being 7.44; in the XRD test, I(101)/I(001)=1.25, the thickness of each platelet unit was 1.98 nm, and the average number of the platelet units in the primary particles was 51.

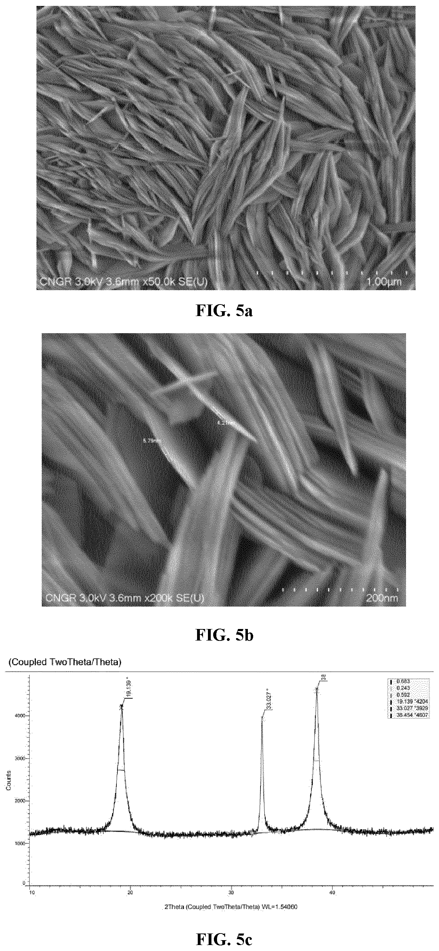

Chemical formula of the positive electrode material precursor sample 5 prepared in Comparative Example 2 was Ni_{0.92}Co_{0.07}Mn_{0.01}(OH)₂, particle size distribution span=1.391, and SEM and XRD are as shown in FIGS. 5a-5c. The primary particles had a width of 75.2 nm and a length of 671.5 nm, thus a length-width ratio being 8.93; in the XRD test, I(101)/I(001)=1.10, the thickness of each platelet unit was 3.27 nm, and the average number of the platelet units in the primary particles was 23.

Through comparison between Comparative Example 1 and Example 1, in the positive electrode material precursor sample 4 in Comparative Example 1, the thickness of each platelet unit in the primary particles was small and less than 5 nm, the average number of the platelet units was high and more than 30, and the width of the primary particles was greater than 110 nm, and the length was greater than 800 nm, both the width and length being more than those in Example 1.

Through comparison between Comparative Example 2 and Example 2, the thickness of each platelet unit in the primary particles in the positive electrode material precursor sample 5 in Comparative Example 2 was small and less than 5 nm, which was smaller than that in Example 2.

Through comparison between Comparative Example 1 and Example 3, the thickness of each platelet unit in the primary particles in the positive electrode material precursor sample 4 in Comparative Example 1 was small and less than 5 nm, the average number of the platelet units was high and more than 30, and the width of the primary particles was greater than 110 nm, and the length was greater than 800 nm, both the width and length being more than those in Example 3.

The positive electrode material precursor samples 1-13 obtained in Examples 1-10 and Comparative Examples 1-3 were respectively mixed uniformly with lithium hydroxide with a molar ratio of 1.05:1, sintered in a box furnace in an air atmosphere at a sintering temperature of 730 °C for 10 hours while maintaining the temperature, and cooled to room temperature, followed by pulverization and sieving, so as to render corresponding positive electrode materials 1-13.

Button half-batteries were tested for electrochemical performance: preparing a slurry with each of the above positive electrode materials 1-13, conductive carbon black, and a binder PVDF (polyvinylidene fluoride) in a mass ratio 8:1:1, and coating the slurry uniformly on an aluminum foil so as to prepare a positive electrode plate; using a metal lithium plate as a negative electrode plate, 1 mol/L LiPF6/EC:DMC (volume ratio) as an electrolyte, assembling a battery shell, the positive electrode plate, the negative electrode plate, a separator, an elastic sheet, and a gasket into a button battery in a vacuum glove box; and testing the electrochemical performance using LAND test system.

At room temperature, charge-discharge tests at 0.1C (1C=210 mAh/g) and 100-cycle tests at 1C were carried out under a condition of 3.0-4.3 V, and data results obtained from the tests are listed in the following Table 3 and Table 4.

**Table 3: Statistical Data of Electrical Performance Tests for Examples 1-3 and Comparative Examples 1-3**

| | Example 1 | Example2 | Example 3 | Comparative Example 1 | Comparative Example 2 | Comparative Example 3 |
|---|---|---|---|---|---|---|
| First charge capacity mAh/g | 253.6 | 243.4 | 252.3 | 242.6 | 239.4 | 243.9 |
| | | | | | | |
| First discharge capacity mAh/g | 236.6 | 229.3 | 235.7 | 227.5 | 220.3 | 231.0 |
| | | | | | | |
| Cycling performance | 89.8% | 90.5% | 89.3% | 87.6% | 85.9% | 84.60% |

| | | | | | | |
|---|---|---|---|---|---|---|
| Note: "First discharge capacity mAh/g" in Table 2 refers to first discharge capacity at 0.1C. | | | | | | |

**TABLE 4: Statistical Data of Electrical Performance Tests for Examples 4-10**

| | Example 4 | Example 5 | Example 6 | Example 7 | Example 8 | Example 9 | Example 10 |
|---|---|---|---|---|---|---|---|
| First charge capacity mAh/g | 251.7 | 243.2 | 232.2 | 248.6 | 246.9 | 246.4 | 229.8 |
| | | | | | | | |
| First discharge capacity mAh/g | 233.1 | 227.8 | 212.8 | 232.4 | 229.5 | 232.6 | 209.1 |
| | | | | | | | |
| Cycling performance | 88.2% | 89.70% | 90.20% | 90.30% | 90.60% | 92.35% | 89.70% |

As evidenced by the electrical performance data in Table 3, the batteries prepared from corresponding positive electrode material precursors in Examples 1-5 and Examples 7-9 exhibited higher first charge capacity and first discharge capacity at 0.1C than Comparative Example 1 and Comparative Example 2, in which the first discharge capacities were all higher than 227 mAh/g. Examples 1-10 exhibited higher cycling performance than Comparative Example 1 and Comparative Example 2, by 88% or higher.

As the thickness of each platelet units in samples 4 and 5 obtained in Comparative Examples 1-2 was not within the range of 5-15 nm, Comparative Examples 1 and 3 had lower first charge capacity, first discharge capacity and cycling performance than Examples 1-3, demonstrating inferior performance.

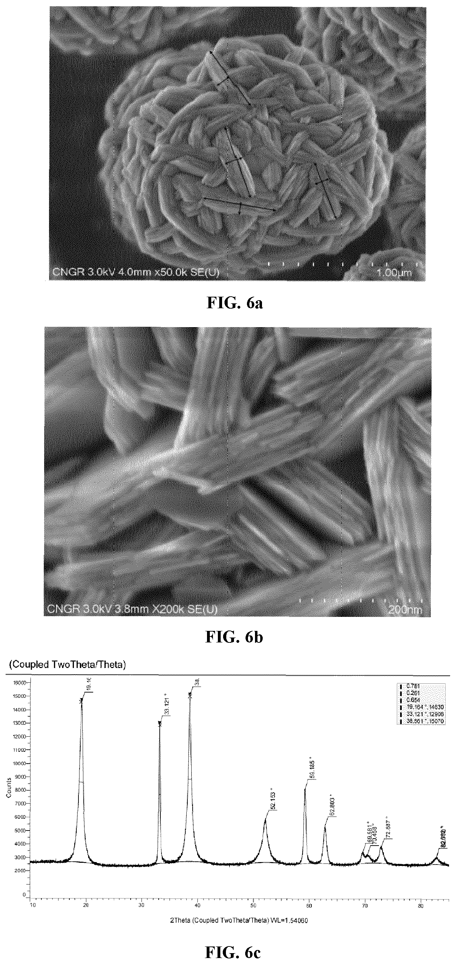

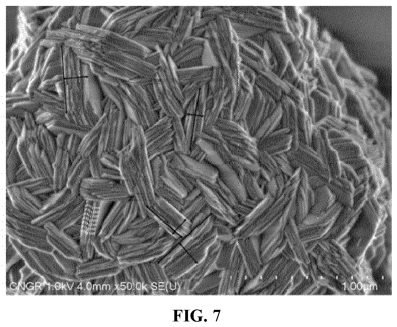

As evidenced by Tables 1-4 and FIGS. 1-7: in the positive electrode material precursor samples 1-3 and 6-11 prepared in Examples 1-9, the thickness of each platelet unit in the primary particles was within the range of 5-15 nm, and the average number of the platelet units was within the range of 5-30, so that strength of the primary particles was stable, and integrity of the primary particles, when being prepared into a positive electrode of a battery, can be maintained at a high temperature and a high voltage, so that the cycling performance of the battery is high; 101/001 peak intensity ratios in Examples 1-3 were all higher than 1.2, indicating that all the platelet units in the positive electrode material precursor samples 1-3 grow preferentially along (101) facet, thus providing wide channels and short paths for transport of lithium ions, thereby facilitating transport of lithium ions, and being beneficial to improving the battery capacity when being fabricated into positive electrodes of batteries. Narrower full width at half maximum of (001) plane and (101) plane indicates good crystallinity of the samples, which further benefits the cycling performance of the batteries fabricated with corresponding positive electrode materials.

Compared with Example 1, in the positive electrode material precursor sample 4 produced in Comparative Example 1, the thickness of each platelet unit was 1.98 nm and less than 5 nm, the number of the platelet units was 51, and the thickness of the primary particles was greater than 110 nm; therefore, the thickness of each platelet unit and the average number of the platelet units are neither within suitable ranges. As evidenced by the electrical performance test in Table 2, the battery fabricated with corresponding positive electrode material of sample 4 had low first charge capacity and first discharge capacity at 0.1C, and low cycling performance after 100 cycles. Similarly, compared with Example 2, the thickness of each platelet unit in sample 5 in Example 2 was 3.27 nm, not within the suitable range of the platelet unit thickness, and the (101)/(001) peak intensity ratio was low; and as evidenced by the electrical performance test in Table 2, the battery fabricated with corresponding positive electrode material of sample 5 had lower first charge capacity and first charge capacity at 0.1C, and lower cycling performance after 100 cycles.

In conclusion, in the primary particles of the positive electrode material precursors provided in Examples 1-9 of the present invention, the thickness of each platelet unit is within the range of 5-15 nm, and the average number of the platelet units is within the range of 5-30, so that the primary particles with the thickness and the average number of the platelet units within suitable ranges facilitate the transport of lithium ions, thus facilitating improvement on the capacity of the batteries fabricated with corresponding positive electrode materials of the precursors; maintaining the thickness of the primary particles within a range of 30-110 nm can ensure the strength of corresponding positive electrode materials while ensuring sufficient contact between the positive electrode materials and the electrolyte, thus being more conducive to improving the capacity; the 101/001 peak intensity ratios are all higher than 1.2, indicating that the platelet units grow preferentially along the (101) facet, thus shortening and widening the transport channels of lithium ions, improving the conduction rate of lithium ions, and further improving the capacity and cycling performance of the positive electrode materials.

The primary particles of the positive electrode material precursor in the present invention include multiple layers of platelet units, the thickness of each platelet unit ranges from 5 to 15 nm, and the average number of the platelet units in the primary particles ranges from 5 to 30. Preferably, the average number of the platelet units is 5-30, and the thickness of each platelet unit ranges from 5 to 12 nm. In the present invention, the thickness and average number of the platelet units are controlled within the above ranges, so that the strength of the primary particles of the positive electrode material precursor is stable, and the integrity of the primary particles, when being fabricated into the positive electrode of the battery, can be maintained at a high temperature and a high voltage condition, thus ensuring the cycling performance of the battery. The suitable number and thickness range of the platelet units make the width of the primary particles suitable, so as to reduce side reactions of the positive electrode material with the electrolyte, and improve safety of the fabricated battery; moreover, suitable number and thickness range of the platelet units prevent the transport channels of lithium ions from becoming too narrow while ensuring material strength, thus facilitating the transport of lithium ions, and avoiding a diminished conduction rate of lithium ions, so that the positive electrode material prepared from the positive electrode material precursor has higher capacity and more excellent cycling performance.

Although the embodiments of the present invention have been shown and described in the above, it could be understood that the above embodiments are exemplary, and should not be construed as limitation to the present invention. Those ordinarily skilled in the art could change, modify, substitute and vary the above embodiments within the scope of the present invention.

### INDUSTRIAL APPLICABILITY

The present invention provides a positive electrode material precursor and a preparation method therefor, a positive electrode material and a lithium-ion battery. Regarding the positive electrode material precursor, the primary particles of the positive electrode material precursor include multiple layers of platelet units; and an average number of the platelet units is 5-30, and each platelet unit has a thickness ranging from 5 to 15 nm. The positive electrode material precursor and the preparation method therefor provided in the present invention can solve the problems of low capacity and unfavorable cycling performance of the positive electrode material in the ternary lithium battery due to difficult deintercalation and intercalation of lithium ions and low conduction rate of lithium ions. By designing the structure of the positive electrode material precursor provided in the present invention, deintercalation, intercalation and diffusion of lithium ions in the positive electrode material are easier, and the conduction rate of lithium ions is greatly increased, such that the capacity and cycling performance of the positive electrode material are further enhanced.

In addition, it can be understood that the positive electrode material precursor and the preparation method therefor, the positive electrode material and the lithium-ion battery in the present invention are reproducible, and can be applied in various industrial applications. For example, the positive electrode material precursor and the preparation method therefor, the positive electrode material and the lithium-ion battery in the present invention can be used in the technical field of lithium-ion batteries.

## Claims

1. A positive electrode material precursor, **characterized in that**
primary particles of the positive electrode material precursor comprise multiple layers of platelet units; and
an average number of the platelet units ranges from 5 to 30, and a thickness of each platelet unit ranges from 5 to 15 nm.

2. The positive electrode material precursor according to claim 1, wherein the average number of the platelet units ranges from 5 to 30, and the thickness of each platelet unit ranges from 5 to 12 nm; preferably, the average number of the platelet units ranges from 8 to 25, and the thickness of each platelet unit ranges from 7 to 12 nm; and preferably, the average number of the platelet units ranges from 8 to 25, and the thickness of each platelet unit ranges from 7 to 11.5 nm.

3. The positive electrode material precursor according to claim 1, wherein the primary particles of the positive electrode material precursor are formed by stacking a plurality of the platelet units;
preferably, the primary particles formed by stacking a plurality of the platelet units are in an elongated shape; and
preferably, a particle width of the primary particles ranges from 30 to 150 nm; a particle length of the primary particles ranges from 400 to 800 nm; a length-width ratio of the primary particles ranges from 2.0 to 13.0; and preferably, the length-width ratio of the primary particles ranges from 4.0 to 13.0.

4. The positive electrode material precursor according to claim 1, wherein a chemical formula of the positive electrode material precursor is:
NiₓCo_{y}M_{z}(OH)₂, where x+y+z=1, 0.7≤x<1, 0≤y≤0.3, 0<z≤0.3, M is at least one selected from Mg, Sr, Ba, B, Al, Si, Mn, Ti, Zr and W.

5. The positive electrode material precursor according to claim 1, wherein in an XRD pattern of the positive electrode material precursor, a peak intensity ratio of I(101) to I(001) ranges from 1.05 to 1.5; and/or
a porosity of the positive electrode material precursor ranges from 2% to 14%; preferably, the porosity of the positive electrode material precursor ranges from 3% to 12%; and/or
D50 of the positive electrode material precursor ranges from 2 to 18 µm.

6. The positive electrode material precursor according to any one of claims 1-5, wherein in an XRD pattern of the positive electrode material precursor, a full width at half maximum of (001) facet ranges from 0.40° to 0.65°, and a full width at half maximum of (101) facet ranges from 0.45° to 0.60°.

7. A preparation method for a positive electrode material precursor, **characterized by** comprising:
providing a metal salt solution, a precipitating agent and a complexing agent; and
mixing the metal salt solution, the precipitating agent and the complexing agent and performing a co-precipitation reaction to render the positive electrode material precursor.

8. The preparation method according to claim 7, wherein the mixing the metal salt solution, the precipitating agent and the complexing agent and performing a co-precipitation reaction to render the positive electrode material precursor comprises:
mixing the precipitating agent, the complexing agent and pure water, so as to render a first base solution; adding the metal salt solution, the complexing agent and the precipitating agent into the first base solution, to perform a first co-precipitation reaction, so as to render the positive electrode material precursor.

9. The preparation method according to claim 7, wherein the mixing the metal salt solution, the precipitating agent and the complexing agent and performing a co-precipitation reaction to render the positive electrode material precursor comprises:
mixing the precipitating agent, the complexing agent and pure water, so as to render a first base solution, adding the metal salt solution, the complexing agent and the precipitating agent into the first base solution, to perform a first co-precipitation reaction, so as to render a first metal hydroxide; and
mixing the first metal hydroxide, pure water, the precipitating agent and the complexing agent so as to render a second base solution, adding the metal salt solution, the complexing agent and the precipitating agent into the second base solution, to perform a second co-precipitation reaction, so as to render the positive electrode material precursor.

10. The preparation method according to claim 8 or 9, wherein
in the providing the metal salt solution, the precipitating agent and the complexing agent, a concentration of the metal salt solution ranges from 1.0 to 2.0 mol/L; the precipitating agent comprises a sodium hydroxide aqueous solution with a concentration ranging from 5 to 12 mol/L; and the complexing agent comprises an aqueous ammonia solution with a concentration ranging from 1 to 10 mol/L; and
a flow rate of adding the metal salt solution into the first base solution or the second base solution ranges from 4.0% to 7.5%/h of a total volume of a reaction vessel; a pH value of the first base solution ranges from 11 to 12, and an ammonia concentration in reaction system ranges from 2 to 5 g/L.

11. The preparation method according to claim 9, wherein a pH value of the second base solution is 10-11, and an ammonia concentration in reaction system ranges from 2 to 6 g/L; and preferably, the ammonia concentration in the reaction system ranges from 3 to 6 g/L.

12. A positive electrode material, **characterized in that** the positive electrode material is prepared by the positive electrode material precursor according to any one of claims 1-6.

13. A lithium-ion battery, **characterized in that** raw materials of the lithium-ion battery comprise the positive electrode material according to claim 12.
